# EUROPÄISCHE PATENTSCHRIFT

(11) **EP 0 825 410 B1**
(45) Veröffentlichungstag und Bekanntmachung des Hinweises auf die Patenterteilung: **20.10.1999**
(21) Anmeldenummer: 97114051.2
(22) Anmeldetag: 14.08.1997
(51) Int. Cl.: F41H 7/02, B60K 5/08, B60K 5/10

(54) **Gefechtsfahrzeug mit dieselelektrischem Antrieb und Heckluke**
Armoured land vehicle with rear door and diesel electric propulsion
Véhicule blindé à propulsion diesel électrique, le véhicule comportant une porte de sortie arrière

(30) Priorität: 20.08.1996 DE 19633329
(43) Veröffentlichungstag der Anmeldung: 25.02.1998
(73) Patentinhaber: Wegmann & Co. GmbH, D-34127 Kassel (DE)
(72) Erfinder: Abels, Frank, 29633 Munster (DE)
(74) Vertreter: Feder, Wolf-Dietrich, Dr. Dipl.-Phys.

(56) Entgegenhaltungen:
- EP-A- 0 001 033
- DE-A- 3 239 141
- DE-A- 4 427 322
- DE-A- 19 537 945
- GB-A- 2 135 946
- US-A- 2 475 496
- US-A- 4 325 451
- GERARD TURBE: "La version véhicule blindé de combat du Cobra" REVUE INTERNATIONALE DE DEFENSE, Bd. 21, Nr. 4, 1988, GENEVA-CH, Seiten 391-392, XP002066478
- OGORKIEWICZ R M: "ACHZARIT A RADICALLY DIFFERENT ARMOURED INFANTRY VEHICLE" INTERNATIONAL DEFENSE REVIEW, Bd. 28, Nr. 9, 1.September 1995, Seite 73/74 XP000535347

## Beschreibung

Die Erfindung betrifft ein Gefechtsfahrzeug, insbesondere einen Schützenpanzer, das neben dem dieselelektrischem Antrieb im Heck auch noch über eine Heckluke für die Schützen verfügt, wie z.B. beschrieben in der nicht-vorveröffentlichte DE 195 37 945A. Ein Gefechtsfahrzeug mit dieselelektrischen Antrieb im Heck ist aus: "La version véhicule blindé de combat du Cobra", Revue Internationale de Défense Bd.21 (1988) n°4, Genf CH, Seiten 391-392 bekannt. Ein Schützenpanzer mit Heckluke und dieselelektrischem Antrieb im Bug ist aus der EP 0 001 033 A bekannt.

Schützenpanzer haben im allgemeinen eine Heckluke, um das schnelle Auf- und Absitzen der Besatzung im geschützten Heckbereich zu ermöglichen. Deshalb ist der Antrieb der bekannten Schützenpanzer im allgemeinen vorne angeordnet, um den Heckbereich für Besatzungsraum und Luke freizuhaben.

Nun hat es sich in der Vergangenheit herausgestellt, daß aus verschiedenen Gründen ein Frontantrieb von Gefechtsfahrzeugen nicht günstig ist, woraus sich für ein neues Fahrzeug die Forderung herauskristallisierte, den Antrieb von Schützenpanzern, so wie den von Kampfpanzern, hinten anzuordnen. Da aber gleichzeitig aus wichtigen kampftaktischen Gründen der Heckausstieg über eine Luke auch bei zukünftigen Kampffahrzeugen unabdingbar und wichtige Forderung ist, entsteht bei Betrachtung herkömmlicher Antriebstechniken insoweit ein Widerspruch, daß schon auf den ersten Blick die Forderung nach Antrieb in Heck und Heckluke nicht gemeinsam realisierbar erscheint.

Die israelische Rüstungsindustrie hat versucht (Siehe "Achzarit, a radically different armoured infantry vehicle", International Defense Review Bd. 28 n° 9 September 1995 Coulsdon GB, Seiten 73, 74), diesen Widerspruch aufzulösen, indem sie bei einem neuen Schützenpanzer einen Heckantrieb mit einem Spezialgetriebe anwendet, das so ausgebildet ist, daß zwischen dem Triebwerk und der Seitenwand des Fahrzeuggehäuses ein schmaler Gang entsteht, der im unteren Teil in Höhe von etwa 50 cm einen Getriebetunnel zum rechten Antriebsrad aufweist. Der Raum oberhalb des Getriebetunnels ist natürlich mit etwa 60 cm Höhe viel zu niedrig, um ein schnelles Auf- oder Absitzen der Besatzung zu ermöglichen. Um den Gang höher zu machen wendet man bei dem israelischen Fahrzeug den Kunstgriff an, das Dach oberhalb des Ganges im Heckbereich anzuheben, so daß eine dreieckige "Dachgaube" entsteht, durch die die Soldaten den Schützenpanzer verlassen können.

Nachteile dieses Prinzips
- enge Platzverhältnisse trotz der angehobenen Dachgaube
- Schützenpanzer vergrößert im kritischen Moment des Absitzens seine Silhouette gerade in demjenigen Bereich, der besonders gefährdet ist;
- Besatzung muß beim Auf- oder Absitzen den hohen Getriebetunnel überspringen.

Es werden seit längerem Überlegungen und Untersuchungen angestellt, den Antrieb von Gefechtsfahrzeugen auf dieselelektrischer Basis zu organisieren. Dabei wird von einer Verbrennungsmaschine, vorzugsweise einem Dieselmotor, der einen Generator antreibt und den erzeugten Strom über entsprechende Leitungen zu Antriebsmotoren an den Kettenantrieben leitet, ausgegangen. Eine solche dieselelektrische Antriebseinrichtung weist als Hauptvorteil die Möglichkeit auf, die bisher zusammengebauten Baugruppen, Motor, Getriebe und Endantriebe, die als ein Block im Fahrzeug zu integrieren waren und damit im allgemeinen die Konfiguration der Fahrzeuge bestimmte, nun unter Anwendung des dieselelektrischen Prinzips getrennt als Verbrennungsmaschine, Generator und Elektromotoren aufgelockert im Fahrzeug einzubauen, so daß eine bessere Raumausnutzung eines Fahrzeugs möglich ist. Bei bisherigen Vorschlägen dieselelektrischer Fahrzeuge wurde im allgemeinen von einer, höchstens zwei Verbrennungsmaschinen ausgegangen, die dann im Front- oder Heckbereich (auch im Mittelbereich) des Fahrzeuges angeordnet wurden und aufgrund ihrer Gesamtgröße doch noch konzeptbestimmend waren. Bei der Konstruktion von Kampffahrzeugen stellt es sich immer wieder heraus, daß es viele Ecken und Nischen gibt, die als Volumen zur Verfügung stehen, aber nicht optimal genutzt werden können, weil ihre Ausformung, z.B. zur Integration eines großen Triebwerkes zu klein ist.

Demgegenüber liegt der Erfindung die Aufgabe zugrunde, für ein Gefechtsfahrzeug (Schützenpanzer) eine ergonomisch günstige und raumsparende Anordnung zu finden, die ein schnelles und bequemes Auf- und Absitzen aus dem Fahrzeug ermöglicht, obwohl der Antrieb des Fahrzeuges nicht im Frontbereich angeordnet ist.

Gelöst wird diese Aufgabe durch die im Patentanspruch 1 angegebenen Merkmale.

Vorteilhafte Ausgestaltung und Weiterbildung der Erfindung gehen aus den Merkmalen der Unteransprüche hervor.

Die Erfindung geht von dem Grundgedanken aus, die Verbrennungsmaschinen in mehrere kleinere Baueinheiten aufzuteilen und an günstigen Plätzen im Fahrzeug zu verteilen, um eine bessere Raumausnutzung in einem Kampffahrzeug zu erhalten.

Es wird erfindungsgemäß die Leistung von etwa 1300 kW zum Antrieb eines Kampffahrzeuges nicht durch einen einzigen Motor sondern durch mehrere z.B. 10 kleine Motoren von je 130 kW aufgebracht. Solche 130 kW Motoren sind als Automobilmotoren (Turbodiesel) von verschiedenen Herstellern auf dem Markt, z.B. das Modell OM 606 D 30 LA der Firma Daimler Benz. Die Abmessung dieser kleinen Motoren gestattet es, bisher nicht nutzbare Räume in Kampffahrzeugen zur Motorintegration zu nutzen und damit ganz neue Fahrzeugkonzepte möglich zu machen. Dem dieselelektrischen Antrieb wird bei dieser erfindungsgemäßen Technik Rechnung getragen, indem an jedem der kleinen Dieselmotoren ein elektrischer Generator angeflanscht ist und die Leistung dieser Generatoren zur Versorgung der E-Motoren an den Ketten zusammengefaßt wird. Neben der günstigen räumlichen Anordnung bei der Verwendung solcher Antriebe entsteht der Vorteil der Redundanzen innerhalb des Systems, weil bei Ausfall einzelner Motoren, sei es durch technische Mängel oder Beschuß, das Gesamtsystem, wenn auch mit niedrigerer Leistung, noch erhalten bleibt. Darüberhinaus zeichnet es sich ab, daß die Verwendung mehrerer kleiner Motoren im Gesamtgewicht günstiger als der Einsatz eines großen Motors ist und auch auf der Kostenseite die Verwendung von Standardtriebwerken hoher Stückzahlen aus dem Automobilbau Vorteile verspricht.

Im folgenden werden anhand der beigefügten Zeichnungen Ausführungsbeispiele eines Gefechtsfahrzeugs nach der Erfindung näher erläutert.
Fig. 1 zeigt in perspektivischer Darstellung ein Gefechtsfahrzeug gemäß einer ersten Ausführungsform der Erfindung;
Fig. 2 zeigt in einer Darstellung analog Fig. 1 das Gefechtsfahrzeug in einer teilweise explodierten Darstellung;
Fig. 3 zeigt in einer gegenüber den Fig. 1 und 2 vergrößerten, teilweise explodierten Darstellung einen der Motorstränge des Gefechtsfahrzeugs nach Fig. 1 und 2;
Fig. 4A zeigt in perspektivischer Darstellung eine zweite Ausführungsform des Gefechtsfahrzeugs nach der Erfindung bei abgenommenem Motorblock;
Fig. 4B zeigt das Gefechtsfahrzeug nach Fig. 4A mit aufgesetztem Motorblock;
Fig. 4C zeigt das Gefechtsfahrzeug nach Fig. 4A mit aufgesetztem und angehobenem Motorblock;
Fig. 5A zeigt in perspektivischer Darstellung das Gefechtsfahrzeug nach der Erfindung in einer dritten Ausführungsform bei abgenommenen Motorblöcken;
Fig. 5B zeigt das Gefechtsfahrzeug nach Fig. 5A mit aufgesetzten Motorblöcken;
Fig. 5C zeigt das Gefechtsfahrzeug nach Fig. 5A mit aufgesetzten und auseinander geschobenen Motorblöcken;
Fig. 6A zeigt in perspektivischer Darstellung eine vierte Ausführungsform des Gefechtsfahrzeugs nach der Erfindung mit abgenommenen Motorblöcken;
Fig. 6B zeigt das Gefechtsfahrzeug nach Fig. 6A mit aufgesetzten Motorblöcken;
Fig. 6C zeigt das Gefechtsfahrzeug nach Fig. 6A mit aufgesetzten und nach außen hochgeschwenkten Motorblöcken;
Fig. 7A zeigt in perspektivischer Darstellung eine fünfte Ausführungsform des Gefechtsfahrzeugs nach der Erfindung mit abgenommenen Motorblöcken;
Fig. 7B zeigt das Gefechtsfahrzeug nach Fig. 7A mit aufgesetzten Motorblöcken;
Fig. 7C zeigt das Gefechtsfahrzeug nach Fig. 7A mit aufgesetzten und um eine vertikale Achse nach außen verschwenkten Motorblöcken.

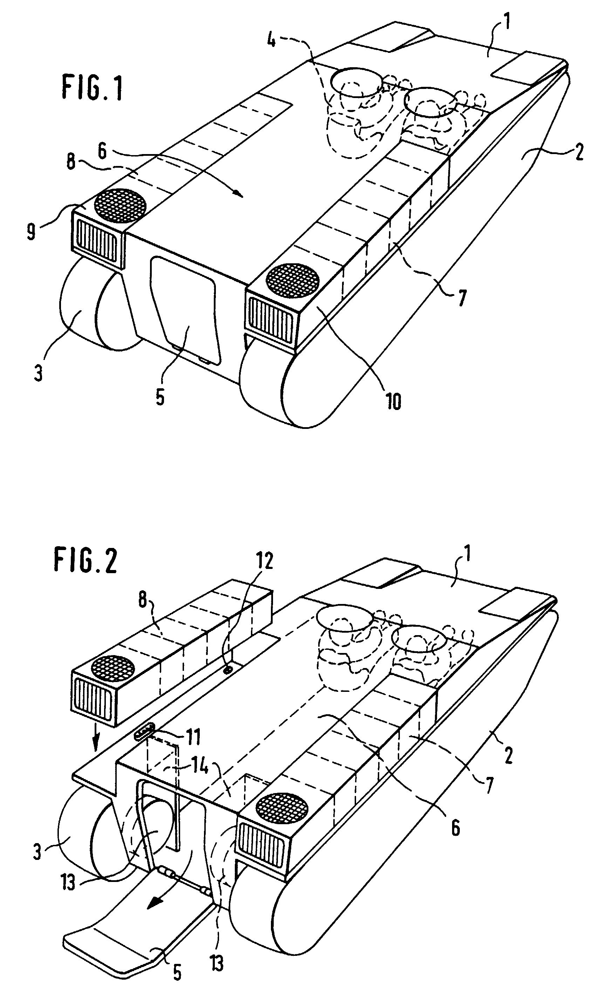

In Fig. 1 ist das Gefechtsfahrzeug mit Kettenlaufwerk mit einer Zwei-Mann-Kernbesatzung dargestellt. Zur Verdeutlichung ist die für diese Erfindung nicht relevante Waffenanlage weggelassen. Es ist erkennbar: Gehäuse des Gefechtsfahrzeuges 1 mit rechtem Kettenstrang 2, linkem Kettenstrang 3, Kernbesatzung 4, Ausstiegsluke 5, Besatzungsraum unter Dach 6, rechter Motorstrang 7, linker Motorstrang 8, Lüfter und Abgasanlage 9 und 10.

In Fig. 2 ist zusätzlich erkennbar: herausgeklappte Luke 5, herausgehobener Antriebsstrang 8, elektrischer Verbindungsstecker 11, Kraftstoffleitungsstutzen 12, Elektroantrieb links und rechts 13, elektronische Steuerung für Antrieb links und rechts 14.

In den Antriebssträngen 7 und 8 sind jeweils fünf Turbodieselmotoren mit ca. 130 kW (z.B. Daimler Benz OM 606 D 30 LA) nebeneinander angeordnet, so daß sie raummäßig oberhalb der Kettenabdeckung Platz finden. An jedem dieser Turbodieselmotoren ist ein Generator angeflanscht. Die Generatoren zusammengenommen liefern über die elektronische Steuerung 14 ihre Leistung an die Elektromotoren 13, die mit Vorgelege auf die Kettenstränge 2 wirken. Die Elektromotoren 13 sind so angeordnet, daß zwischen ihnen ausreichend Platz für die Integration der Luke 5 gegeben ist, so daß die Besatzung aus dem Besatzungsraum 6 über die Luke 5 bequem aus- und einsteigen kann. Besonders vorteilhaft ist die Anordnung der Motoren dann, wenn nicht nur zwei sondern vier Antriebsmotoren zur Anwendung kommen, wobei zwei weitere Motoren vorne angeordnet sind, so daß das Einzelvolumen der vier Motoren kleiner ist und damit eine größere Luke zum Durchstieg ermöglicht wird.

In Fig. 2 ist weiterhin erkennbar, daß der Antriebsstrang 8 (Motoren mit Generatoren, Kühler und Abluftanlage) in einem Stück vom Fahrzeug zum Zwecke des Austauschs oder der Instandsetzung getrennt werden kann. Die Motorenstränge sind so ausgelegt, daß sie auf der rechten als auch auf der linken Seite verwendet werden können.

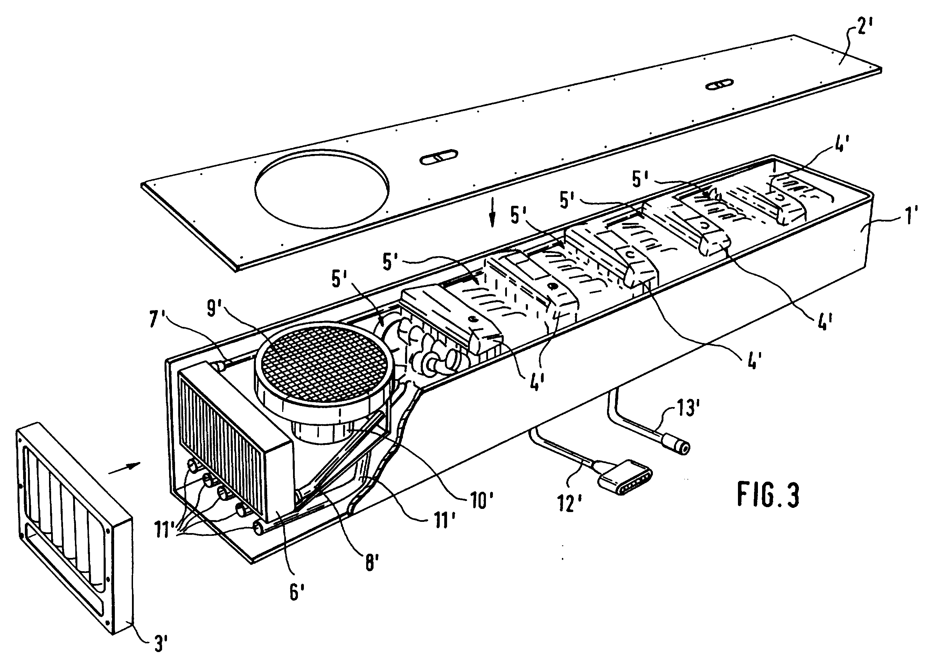

In Fig. 3 ist erkennbar, daß Motorgehäuse 1' mit Deckel 2' und Kühlergrill 3', Motoren 4', Generatoren 5', Kühler 6' mit Zuleitung 7' und Ableitung 8', Lüfter 9', Lüftermotor 10', Abgasleitung 11', Leitungs- und Steuerkabel mit Stecker 12' sowie Kraftstoffleitung und Schnellkupplung 13'.

Dieser Motorenblock ist ein Beispiel für die Anordnung, wobei es selbstverständlich auch möglich ist, die Motoren hintereinander, nebeneinander oder in zwei Reihen anzuordnen, woraus sich andere Antriebsaggregatformen zur besseren Integration bei entsprechenden Konzepten ergeben.

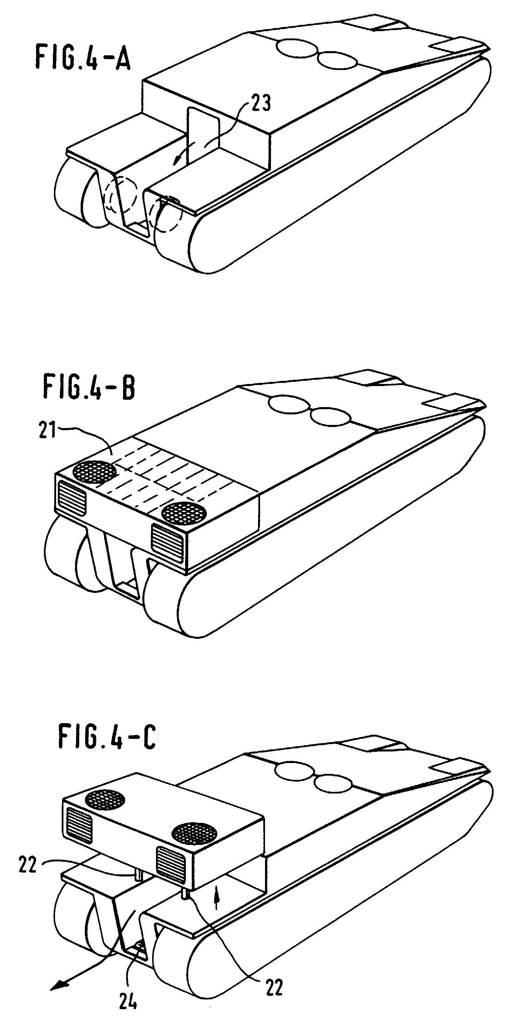

In den Fig. 4A bis 4C ist ein anderes Ausführungsbeispiel erkennbar, wobei in diesem Falle die einzelnen Motoren nicht in zwei Strängen seitlich des Fahrzeuges sondern in einem Paket am Heck des Fahrzeuges so angeordnet sind, daß dieser Motorblock 21 einerseits bei Instandsetzungsarbeiten leicht heruntergenommen werden kann und zweitens durch Anheben über die Zylinder 22 den Durchgang 23 für die Besatzung freigibt, so daß die Besatzung durch die Tür 24 in das Fahrzeug auf- und absitzen kann.

Bei dieser Ausführungsform sind also sämtliche dieselelektrischen Aggregate des Fahrzeugs in einem gemeinsamen, im Heckbereich des Fahrzeugs angeordneten und sich im wesentlichen über die ganze Fahrzeugbreite erstreckenden Gehäuse 21 angeordnet, wobei der Durchgangsraum 23 unterhalb dieses Gehäuses angeordnet ist und das Gehäuse 21 mittels einer Hebevorrichtung 22 in vertikaler Richtung um eine vorgegebene Strecke anhebbar ist.

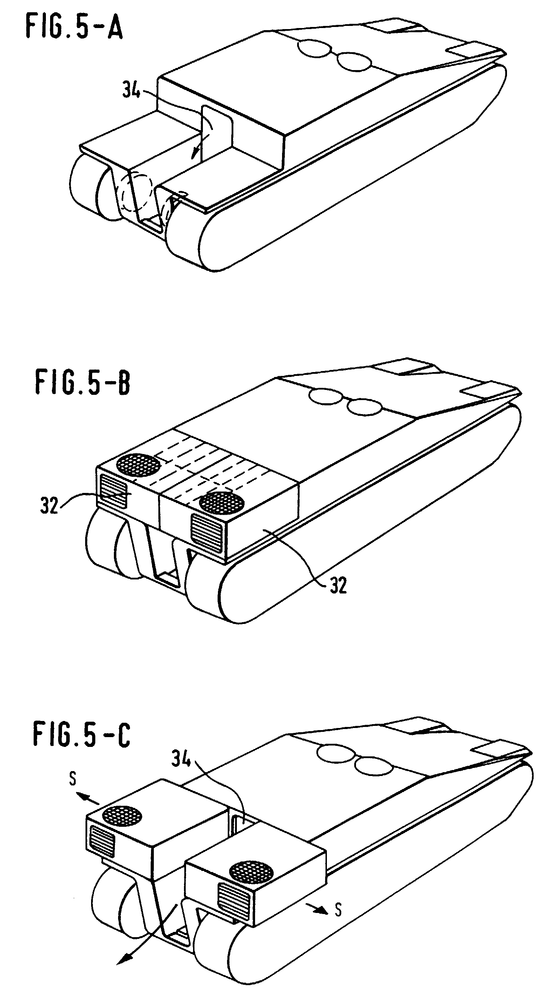

Ein anderes erfindungsgemäßes Ausführungsbeispiel ist in den Fig. 5A bis 5C dargestellt, wobei statt eines Motorblocks hier zwei mit jeweils halber Leistung auf dem Heck des Fahrzeugs so angeordnet sind, daß die Motorblöcke 32 auf Schienen gelagert und durch geeignete hydraulische Zylinder in Pfeilrichtung zur Seite geschoben werden können, damit der Durchgang zum Auf- und Absitzen der Besatzung im Bedarfsfall freigegeben werden kann.

Es handelt sich also hier um eine Ausführungsform, bei der jeweils eine Hälfte der dieselelektrischen Aggregate in einem gemeinsamen, im Heckbereich des Fahrzeugs angeordneten Gehäuse 32 angeordnet ist, wobei die beiden symmetrisch zur Längsmittelachse des Fahrzeugs angeordneten Gehäuse 32 im fahrbereiten Zustand des Fahrzeugs in Richtung der Fahrzeugbreite aneinander anschließen und der Durchgangsraum 34 unterhalb des Gehäuses angeordnet ist und die Gehäuse jeweils mittels einer Verschiebevorrichtung in horizontaler Richtung um eine vorgegebene Strecke nach außen verschiebbar sind.

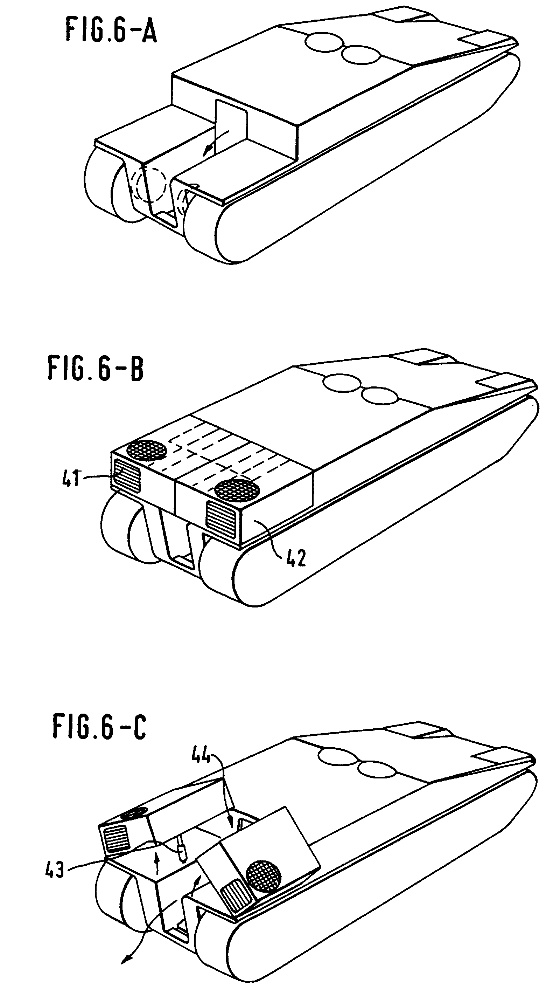

Ein weiteres Ausführungsbeispiel der Erfindung ist in den Fig. 6A bis 6C dargestellt, wobei sich diese Ausführungsform von der vorangegangenen dadurch unterscheidet, daß die getrennten Motorblöcke 41 und 42 in diesem Falle durch hydraulische Zylinder 43 so angehoben werden können, daß die Besatzung durch die Luke 44 und den durch die angehobenen Motorblöcke entstandenen Spalt bequem auf- und absitzen kann.

Allgemein zeichnet sich diese Ausführungsform dadurch aus, daß jeweils eine Hälfte der dieselelektrischen Aggregate in einem gemeinsamen, im Heckbereich des Fahrzeugs angeordneten Gehäuse 41 bzw. 42 angeordnet ist, wobei die beiden symmetrisch zur Längsmittelachse des Fahrzeugs angeordneten Gehäuse im fahrbereiten Zustand des Fahrzeugs in Richtung der Fahrzeugbreite aneinander anschließen und der Durchgangsraum 44 unterhalb der Gehäuse angeordnet ist und die Gehäuse jeweils mittels einer Kippvorrichtung 43 um eine in Fahrzeuglängsrichtung verlaufende, jeweils an der unteren Außenkante des Gehäuses liegende horizontale Drehachse um einen vorgegebenen Winkel nach außen kippbar sind.

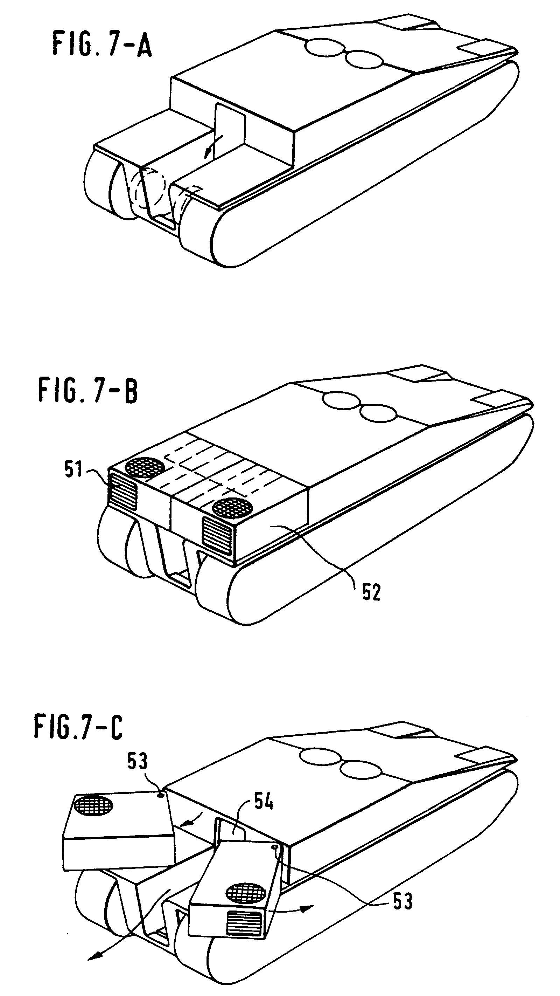

Ein weiteres Ausführungsbeispiel der Erfindung ist in den Fig. 7A bis 7C dargestellt, wobei sich diese Ausführungsform von den vorangegangenen dadurch unterscheidet, daß hier die Motorblöcke 51 und 52 nicht mehr seitlich verschoben, sondern um den Drehpunkt 53 so verdreht werden können, daß der Durchgang 54 zum Auf- und Absitzen der Besatzung freigemacht wird.

Allgemein zeichnet sich diese Ausführungsform dadurch aus, daß jeweils eine Hälfte der dieselelektrischen Aggregate in einem gemeinsamen im Heckbereich des Fahrzeugs angeordneten Gehäuse 51, 52 angeordnet ist, wobei die beiden symmetrisch zur Längsmittelachse des Fahrzeugs angeordneten Gehäuse im fahrbereiten Zustand des Fahrzeugs in Richtung der Fahrzeugbreite aneinander anschließen und der Durchgangsraum 54 unterhalb der Gehäuse angeordnet ist und die Gehäuse 51, 52 jeweils mittels einer Schwenkvorrichtung um eine im Bereich der vorderen äußeren Gehäuseecke angeordnete vertikale Schwenkachse um einen vorgegebenen Winkel nach außen schwenkbar sind.

Wie aus Fig. 1 und 2 ersichtlich, kann bei dieser und den anderen Ausführungsformen der Besatzungsraum 6 über die Luke betreten werden, die nach unten oder auch zur Seite wie eine Tür ausgeklappt werden kann. Die Einrichtung der Besatzungsplätze in diesem Raum kann variiert werden, z.B. Personal in Fahrtrichtung, Personal gegen die Fahrtrichtung oder auch Personal quer zur Fahrtrichtung angeordnet.

Die Vorteile der erfindungsgemäßen Ausführung sind:
- große Heckluke trotz Antrieb im Heckbereich möglich;
- redundante Antriebsstränge - bei Ausfall einer Seite durch Beschuß oder technischem Versagen bleibt Mobilität durch den zweiten Antriebsstrang erhalten;
- Ausfall einzelner Motoren innerhalb der Antriebsstränge führt nur zu einer Leistungsminderung aber nicht zu einem Gesamtausfall;
- Antriebsteile können untereinander ausgetauscht werden (modulares Prinzip);
- großer Besatzungsraum möglich, weil Hauptantriebsanlage mit mechanischem Getriebe, das sonst den Raum zwischen den Fahrzeugwänden ausfüllt, entfällt;
- günstige Kosten durch Verwendung von Standardtriebwerken aus der PKW Produktion.

## Patentansprüche

1. Gefechtsfahrzeug mit Heckluke und einem Kettenfahrwerk, das von einer im hinteren Teil des Fahrzeugs angeordneten dieselelektrischen Antriebsvorrichtung antreibbar ist, wobei die Antriebsvorrichtung separate, die Ketten (2) antreibende Elektromotoren (13) aufweist sowie mehrere stromerzeugende dieselelektrische Aggregate (7, 8), die jeweils aus einem von einem PKW-Dieselmotor (4') angetriebenen Generator (5') bestehen, wobei die dieselelektrischen Aggregate oberhalb der Kettenabdeckung symmetrisch zur Längsmittelachse des Fahrzeugs derart angeordnet sind, daß ein Durchgangsraum zwischen dem Fahrzeuginnenraum und der Heckluke (5) frei bleibt, oder durch Bewegung der dieselelektrischen Aggregate (21, 32, 41, 42, 51, 52) freimachbar bzw. erweiterbar ist.

2. Gefechtsfahrzeug nach Anspruch 1, dadurch gekennzeichnet, daß als Dieselmotoren (4') PKW-Turbodieselmotoren dienen.

3. Gefechtsfahrzeug nach Anspruch 1 oder 2, dadurch gekennzeichnet, daß mehrere dieselelektrische Aggregate in Längsrichtung des Fahrzeugs hintereinander als zusammenhängender Strang (7, 8), dessen Breite im wesentlichen der Breite eines Aggregats entspricht, unmittelbar über der Kettenabdeckung zu beiden Seiten der Längsmittelachse des Fahrzeugs angeordnet sind.

4. Gefechtsfahrzeug nach Anspruch 3, dadurch gekennzeichnet, daß jeweils die dieselelektrischen Aggregate (7, 8) einer Fahrzeugseite in einem gemeinsamen Gehäuse angeordnet sind, das lösbar mit dem Fahrzeug verbunden ist.

5. Gefechtsfahrzeug nach Anspruch 4, dadurch gekennzeichnet, daß an einem Ende jedes Gehäuses eine allen Aggregaten dieses Gehäuses zugeordnete elektrisch angetriebene Kühlvorrichtung (6'bis 9') angeordnet ist.

6. Gefechtsfahrzeug nach Anspruch 5, dadurch gekennzeichnet, daß in die Kühlvorrichtung eine Abgasanlage integriert ist.

7. Gefechtsfahrzeug nach einem der Ansprüche 1 oder 2, dadurch gekennzeichnet, daß sämtliche dieselelektrischen Aggregate des Fahrzeugs in einem gemeinsamen, im Heckbereich des Fahrzeugs angeordneten und sich im wesentlichen über die ganze Fahrzeugbreite erstreckenden Gehäuse (21) angeordnet sind, wobei der Durchgangsraum (24) unterhalb dieses Gehäuses angeordnet ist und das Gehäuse mittels einer Hebevorrichtung (22) in vertikaler Richtung um eine vorgegebene Strecke anhebbar ist.

8. Gefechtsfahrzeug nach Anspruch 1 oder 2, dadurch gekennzeichnet, daß jeweils eine Hälfte der dieselelektrischen Aggregate in einem gemeinsamen, im Heckbereich des Fahrzeugs angeordneten Gehäuse (32) angeordnet ist, wobei die beiden symmetrisch zur Längsmittelachse des Fahrzeugs angeordneten Gehäuse (32) im fahrbereiten Zustand des Fahrzeugs in Richtung der Fahrzeugbreite aneinander anschließen und der Durchgangsraum (34) unterhalb der Gehäuse (32) angeordnet ist und die Gehäuse jeweils mittels einer Verschiebevorrichtung in horizontaler Richtung um eine vorgegebene Strecke nach außen verschiebbar sind.

9. Gefechtsfahrzeug nach Anspruch 1 oder 2, dadurch gekennzeichnet, daß jeweils eine Hälfte der dieselelektrischen Aggregate in einem gemeinsamen, im Heckbereich des Fahrzeugs angeordneten Gehäuse (41, 42) angeordnet ist, wobei die beiden symmetrisch zur Längsmittelachse des Fahrzeugs angeordneten Gehäuse im fahrbereiten Zustand des Fahrzeugs in Richtung der Fahrzeugbreite aneinander anschließen und der Durchgangsraum (44) unterhalb der Gehäuse (41, 42) angeordnet ist und die Gehäuse jeweils mittels einer Kippvorrichtung (43) um eine in Fahrzeuglängsrichtung verlaufende, jeweils an der unteren Außenkante des Gehäuses liegende horizontale Drehachse um einen vorgegebenen Winkel nach außen kippbar sind.

10. Gefechtsfahrzeug nach Anspruch 1 oder 2, dadurch gekennzeichnet, daß jeweils eine Hälfte der dieselelektrischen Aggregate in einem gemeinsamen, im Heckbereich des Fahrzeugs angeordneten Gehäuse (51, 52) angeordnet ist, wobei die beiden symmetrisch zur Längsmittelachse des Fahrzeugs angeordneten Gehäuse (51, 52) im fahrbereiten Zustand des Fahrzeugs in Richtung der Fahrzeugbreite aneinander anschließen und der Durchgangsraum (54) unterhalb der Gehäuse (51, 52) angeordnet ist und die Gehäuse jeweils mittels einer Schwenkvorrichtung um eine im Bereich der vorderen äußeren Gehäuseecke angeordnete vertikale Schwenkachse (53) um einen vorgegebenen Winkel nach außen schwenkbar sind.

## Claims

1. Fighting vehicle with rear hatch and a chain running gear which is capable of being driven by a diesel-electric drive device arranged in the rear part of the vehicle, wherein the drive device comprises separate electric motors (13) driving the chains (2) and also several current-generating diesel-electric units (7, 8) which each consist of a generator (5') driven by an automobile diesel engine (4'), whereby the diesel-electric units are arranged above the chain covering symmetrically with respect to the longitudinal centre axis of the vehicle in such a way that a passageway space remains free between the interior of the vehicle and the rear hatch (5) or is capable of being rendered free or enlarged as a result of movement of the diesel-electric units (21, 32, 41, 42, 51, 52).

2. Fighting vehicle according to Claim 1, characterised in that automobile turbodiesel engines serve as diesel engines (4').

3. Fighting vehicle according to Claim 1 or 2, characterised in that several diesel-electric units are arranged in series in the longitudinal direction of the vehicle in the form of a connected train (7, 8), the width of which corresponds substantially to the width of a unit, directly above the chain covering on both sides of the longitudinal centre axis of the vehicle.

4. Fighting vehicle according to Claim 3, characterised in that the diesel-electric units (7, 8) pertaining, in each case, to one side of the vehicle are arranged in a common housing which is detachably connected to the vehicle.

5. Fighting vehicle according to Claim 4, characterised in that at one end of each housing an electrically driven cooling device (6' to 9') is arranged which is assigned to all the units pertaining to said housing.

6. Fighting vehicle according to Claim 5, characterised in that an exhaust system is integrated within the cooling device.

7. Fighting vehicle according to one of Claims 1 or 2, characterised in that all the diesel-electric units of the vehicle are arranged in a common housing (21) arranged in the rear region of the vehicle and extending substantially over the entire width of the vehicle, whereby the passageway space (24) is arranged below said housing and the housing is capable of being raised by a predetermined distance in the vertical direction by means of a lifting device (22).

8. Fighting vehicle according to Claim 1 or 2, characterised in that, in each case, one half of the diesel-electric units is arranged in a common housing (32) arranged in the rear region of the vehicle, whereby the two housings (32) arranged symmetrically with respect to the longitudinal centre axis of the vehicle adjoin one another in the direction of the vehicle width in the ready-to-drive state of the vehicle and the passageway space (34) is arranged below the housings (32) and the housings are each capable of being displaced outwards by a predetermined distance in the horizontal direction by means of a displacing device.

9. Fighting vehicle according to Claim 1 or 2, characterised in that, in each case, one half of the diesel-electric units is arranged in a common housing (41, 42) arranged in the rear region of the vehicle, whereby the two housings arranged symmetrically with respect to the longitudinal centre axis of the vehicle adjoin one another in the direction of the vehicle width in the ready-to-drive state of the vehicle and the passageway space (44) is arranged below the housings (41, 42) and the housings are each capable of being tilted outwards by a predetermined angle about a horizontal axis of rotation extending in the longitudinal direction of the vehicle and located in each case at the lower outer edge of the housing by means of a tilting device (43).

10. Fighting vehicle according to Claim 1 or 2, characterised in that, in each case, one half of the diesel-electric units is arranged in a common housing (51, 52) arranged in the rear region of the vehicle, whereby the two housings (51, 52) arranged symmetrically with respect to the longitudinal centre axis of the vehicle adjoin one another in the direction of the vehicle width in the ready-to-drive state of the vehicle and the passageway space (54) is arranged below the housings (51, 52) and the housings are each capable of being pivoted outwards by a predetermined angle about a vertical pivotal axis (53) arranged in the region of the front outer corner of the housing by means of a tilting device.

## Revendications

1. Véhicule de combat comprenant une écoutille arrière et un train roulant à chenilles qui peut être entraîné par un dispositif de propulsion diesel-électrique agencé dans la partie arrière du véhicule, dans lequel le dispositif propulseur comprend des moteurs électriques séparés qui entraînent les chenilles (2), ainsi que plusieurs groupes diesel-électriques (7, 8) produisant du courant qui sont composés chacun d'une génératrice (5') entraînée par un moteur diesel d'automobile (4'), et les groupes diesel-électriques sont disposés au-dessus du carter de chenilles, symétriquement par rapport à l'axe longitudinal médian du véhicule, de telle manière qu'un espace de passage reste libre entre l'espace intérieur du véhicule et l'écoutille arrière (5), ou encore peut être dégagé ou élargi par un déplacement des groupes diesel-électriques (21, 32, 41, 42, 51, 52).

2. Véhicule de combat selon la revendication 1, caractérisé en ce qu'on utilise comme moteurs diesel (4') des moteurs turbo-diesel d'automobiles.

3. Véhicule de combat selon la revendication 1 ou 2, caractérisé en ce que plusieurs groupes diesel-électriques sont agencés les uns derrière les autres dans la direction longitudinale du véhicule, en une file continue (7,8) dont la largeur correspond sensiblement à la largeur d'un groupe, directement au-dessus du carter de chenille, des deux côtés de l'axe longitudinal médian du véhicule.

4. Véhicule de combat selon la revendication 3, caractérisé en ce que les groupes diesel-électriques (7, 8) d'un côté du véhicule sont disposés dans un carter commun qui est assemblé au véhicule de façon démontable.

5. Véhicule de combat selon la revendication 4, caractérisé en ce qu'à une extrémité de chaque carter, est agencé un dispositif de refroidissement (6' à 9') associé à tous les groupes de ce carter et entraîné électriquement.

6. Véhicule de combat selon la revendication 5, caractérisé en ce qu'un circuit de gaz d'échappement est intégré dans le dispositif de refroidissement.

7. Véhicule de combat selon une des revendications 1 ou 2, caractérisé en ce que tous les groupes diesel-électriques du véhicule sont donc agencés dans un carter commun (21), qui est disposé dans la région arrière du véhicule et s'étend sensiblement sur toute la largeur du véhicule, l'espace de passage (24) étant disposé au-dessous de ce carter et le carter pouvant être soulevé dans la direction verticale sur une course prédéterminée au moyen d'un dispositif élévateur (22).

8. Véhicule de combat selon la revendication 1 ou 2, caractérisé en ce que chacune des moitiés des groupes diesel-électriques est disposée dans un carter commun (32) agencé dans la région arrière du véhicule, les deux carters (32) disposés symétriquement par rapport à l'axe longitudinal médian du véhicule étant adjacents l'un à l'autre, dans la direction de la largeur du véhicule, dans l'état prêt à la marche du véhicule, l'espace de passage (34) étant disposé au-dessous des carters (32) et les carters pouvant être repoussés vers l'extérieur sur une course prédéterminée dans la direction horizontale, chacun au moyen d'un dispositif de translation.

9. Véhicule de combat selon la revendication 1 ou 2, caractérisé en ce chacune des moitiés des groupes diesel-électriques est agencée dans un carter commun (41 ou 42) disposé dans la région arrière du véhicule, les deux carters, disposés symétriquement par rapport à l'axe longitudinal médian du véhicule, étant adjacents l'un à l'autre dans la direction de la largeur du véhicule dans l'état prêt à la marche de ce véhicule et l'espace de passage (44) étant disposé au-dessous des carters (41, 42), et les carters pouvant être basculés vers l'extérieur d'un angle prédéterminé, chacun au moyen d'un dispositif de basculement (43), autour d'un axe de rotation horizontale qui s'étend dans la direction longitudinale du véhicule, et se trouve le long du bord extérieur inférieur du carter.

10. Véhicule de combat selon la revendication 1 ou 2, caractérisé en ce chacune des moitiés des groupes diesel-électriques est agencée dans un carter commun (51, 52) disposé dans la région arrière du véhicule, les deux carters (51, 52) disposés symétriquement par rapport à l'axe longitudinal médian du véhicule étant adjacents l'un à l'autre dans la direction de la largeur du véhicule dans l'état prêt à la marche du véhicule, et l'espace de passage (54) étant disposé au-dessous des carters (51, 52), et les carters pouvant être repoussés vers l'extérieur par pivotement d'un angle prédéterminé, chacun au moyen d'un dispositif de pivotement, autour d'un axe de pivotement vertical (53) disposé dans la région du coin extérieur avant du carter.
